# EUROPÄISCHE PATENTANMELDUNG

(11) **EP 3 401 566 A1**
(43) Veröffentlichungstag der Anmeldung: **14.11.2018**
(21) Anmeldenummer: 18166971.4
(22) Anmeldetag: 12.04.2018
(51) Int. Cl.: F16D 59/02

(54) **HEBEBÜHNENANTRIEB UND ZENTRIFUGALBREMSE FÜR EINEN HEBEBÜHNENANTRIEB**

(30) Priorität: 12.04.2017 DE 202017001945 U
(71) Anmelder: MAHA Maschinenbau Haldenwang GmbH & Co. KG, 87490 Haldenwang (DE)
(72) Erfinder: EZECHIAS, Josef, 71083 Herrenberg (DE)
(74) Vertreter: MERH-IP Matias Erny Reichl Hoffmann Patentanwälte PartG mbB

(57) **Zusammenfassung**

Die Erfindung betrifft einen Hebebühnenantrieb und eine Zentrifugalbremse (1) für einen Hebebühnenantrieb mit einer drehbaren Welle (6), einem stets feststehenden Bremsring (2) und einem umlaufenden Bremsbackenträger (3), der mit der Welle (6) verbunden ist und mindestens eine Bremsbacke (4) und mindestens ein Federelement (5) aufweist. Zum Halten der stillstehenden Welle (6) übt am dann stillstehenden Bremsbackenträger (3) das Federelement (5) auf die bewegliche Bremsbacke (4) eine Kraft in Richtung des stets feststehenden Bremsringes (2) aus, die im Wesentlichen entgegengesetzt zu der auf die Bremsbacke (4) wirkende Zentrifugalkraft ist, die aus einer Drehung des Bremsbackenträgers (3) resultiert. Durch Dimensionierung und Auslegung des Federelementes (5) samt Federn, der Bremsbacke (4) und des feststehenden Bremsringes (2) lässt sich die gewünschte Bremskraft einstellen.

## Beschreibung

Die Erfindung betrifft einen Hebebühnenantrieb und eine Zentrifugalbremse für einen Hebebühnenantrieb, wobei ein ungewolltes Bewegen einer Last auf einer Hebebühne verhindern werden kann und auf dauerhaft wirkende Bremssysteme verzichtet werden kann oder bei vergrößerter Steigung des Spindelgewindes entsprechend schneller gefahren werden kann bei einer gleichzeitig geringeren Antriebsleistung, da nur ein Anfangsbremsmoment zu überwinden ist und die Welle nach dem Anlaufen ab einer bestimmten Drehzahl nicht mehr gebremst wird.

Der Hebebühnenantrieb umfaßt unter anderem einen Motor, eine vom Motor antreibbare Spindel, eine keine Rotation ausführende Mutter, einen mit der Mutter verbundenen Tragarm zur Aufnahme einer Last und die Zentrifugalbremse. Die Last kann etwa ein Kraftfahrzeug sein. Außer bei entsprechender Ansteuerung des Motors ist ein Bewegen der Last unter allen Umständen zu verhindern. Insbesondere ist zu verhindern, dass durch das Gewicht der Last und des Tragarmes über die Mutter unfreiwillig ein Drehen der Spindel induziert wird, das ein Bewegen der Last zur Folge hat. Die Zentrifugalbremse verhindert bei stehendem Motor ein Bewegen der Last, indem sie ein Drehen der Spindel verhindert. Beim Anlaufen des Motors muss die Bremskraft der Zentrifugalbremse mittels eines zusätzlichen Antriebsmoments bzw. Anlaufmoments des Motors überwunden werden.

Die Zentrifugalbremse kann im Allgemeinen zum Halten einer Welle verwendet werden und ist nicht auf ihren Einsatz in einem Hebebühnenantrieb beschränkt. Es können sich jedoch gerade bei einem Hebebühnenantrieb unter Verwendung der Zentrifugalbremse eine Reihe weiterer Vorteile ergeben.

Die Erfindung gewährleistet bei geringen Kosten und kompakten Abmessungen das sichere Halten einer Welle und ermöglicht beim Einsatz in einem Hebebühnenantrieb die Verwendung kleinerer und damit kostengünstigerer Motoren und den Wegfall weiterer Bremssysteme sowie bei vergrößerter Steigung des Spindelgewindes ein entsprechend schnelleres Verfahren der Last, da nach Überwinden des Anfangsbremsmomentes die Welle ab Erreichen einer bestimmten Drehzahl nicht mehr gebremst wird. Etliche Teile des Hebebühnenantriebs können dann eine Doppelfunktion ausüben, weshalb insgesamt nur wenige Teile benötigt werden, die Herstellungs- und Wartungskosten gering sind und der gesamte Antrieb sehr kompakt baut.

Zum sicheren Halten einer Welle muss deren Rotation verhindert werden, wenn diese nicht angetrieben wird. Es muss verhindert werden, dass eine äußere Last eine Kraft induziert, die ein Drehen der Welle bewirkt. Die Größenordnung der äußeren Last ist einsatzbedingt bekannt. Die zum sicheren Halten der Welle notwendige Bremskraft muss bei einer gewünschten Rotation der Welle entweder gezielt durch Aufbringen einer sehr großen Antriebskraft überwunden werden, oder aber die Bremskraft muss bei einer gewünschten Rotation der Welle inaktiv werden. Es ist also möglich, die Welle dauerhaft so stark zu bremsen, dass die erwartbaren äußeren Lasten keine Kraft induzieren können, die nicht sicher kleiner als die permanent wirkende Bremskraft ist. Die stillstehende Welle wird dann sicher gehalten. Der Nachteil dabei ist, dass bei einer gewünschten Rotation der Welle mittels des Antriebsmotors die Summe aus permanent wirkender Bremskraft und induzierter Kraft überwunden werden muss. Ferner ist ein Nachteil, dass großer Verschleiß an der Bremse eintritt. Mithin sind sehr starke, große und teure Antriebsmotoren notwendig sowie große leistungsfähige Bremssysteme.

Aufgabe der Erfindung ist es daher, einen Hebebühnenantrieb und eine Zentrifugalbremse für einen Hebebühnenantrieb bei gleichzeitig geringerer Antriebsleistung zu schaffen.

Zur Lösung der Aufgabe wird eine Zentrifugalbremse vorgeschlagen, die die in Anspruch 1 genannten Merkmale aufweist.

Bei einer derartigen Zentrifugalbremse für einen Hebebühnenantrieb ist eine drehbare Welle vorhanden, ferner ein stets feststehender Bremsring und ein drehbarer Bremsbackenträger, der mit der Welle verbunden ist und der mindestens eine Bremsbacke und mindestens ein Federelement aufweist, wobei zum Halten der Welle das Federelement auf die entsprechend bewegliche Bremsbacke eine Kraft in Richtung des feststehenden Bremsringes ausübt. Da der Bremsbackenträger mit der Welle verbunden ist, rotiert der Bremsbackenträger nicht, wenn die Welle nicht rotiert. Gleiches gilt auch umgekehrt. Wird der Bremsbackenträger mittels der Bremsbacken an dem feststehenden Bremsring gehalten, kann auch die Welle nicht rotieren. Die stillstehende Welle wird somit sicher gehalten, und mittels Dimensionierung von Bremsbackenträger, Bremsbacke, Federelement und des feststehenden Bremsringes lässt sich eine definierte Bremskraft und ein definiertes Bremsmoment erzeugen.

Ziel ist es, eine stillstehende Welle sicher zu halten und bei einem Hebebühnenantrieb das ungewünschte Bewegen einer Last sicher zu verhindern. Bei einer gewünschten Rotation der Welle soll die Bremskraft definiert bis auf null zurückgefahren werden. Gleichzeitig soll die Aufgabe kostengünstig erfüllt werden und bei einem Hebebühnenantrieb die Verwendung kleinerer und somit kostengünstigerer Motoren ermöglichen und große, teure und starkem Verschleiß unterliegende, dauerhaft wirkende Bremssysteme überflüssig machen. Bei einer vergrößerten Spindelsteigung kann entsprechend schneller gefahren werden. Insgesamt sollen möglichst wenige Bauteile benötigt werden, die nur ein möglichst geringes Volumen einnehmen.

Dreht sich hingegen die Welle, dreht sich automatisch auch der Bremsbackenträger. Mithin dreht sich auch die Bremsbacke, die so angebracht ist, dass sie bei einer Drehung einer Zentrifugalkraft ausgesetzt ist, die im Wesentlichen entgegengesetzt zu der Kraft des Federelementes in Richtung des feststehenden Bremsringes ist. Sobald auf Grund der Rotation des Bremsbackenträgers und somit auch der Bremsbacke die Zentrifugalkraft die Federkraft übersteigt, liegt keinerlei Bremskraft mehr vor, da die Bremsbacke vom Bremsring radial nach außen wegbewegt wird.

Die stillstehende Welle wird somit sicher gehalten und die Bremskraft verringert sich ausgehend von ihrem Maximum bei stillstehender Welle entsprechend der Drehzahl der Welle, bis ab einer Grenzdrehzahl der Welle dann gar keine Bremskraft mehr wirkt. Bei entsprechender Dimensionierung wirkt im üblichen Drehzahlbereich der Welle dann keine Bremskraft, die vom Motor überwunden werden muss, da die Grenzdrehzahl unterhalb des üblichen Drehzahlbereiches der Welle gewählt worden ist.

Nur beim Anlaufen des Motors, also bevor die Zentrifugalkraft die Federkraft übersteigt, muss das durch die Bremsbacke verursachte und somit am Bremsbackenträger anliegende Bremsmoment mittels eines zusätzlichen Antriebsmoments bzw. Anlaufmoments des Motors überwunden werden.

Beim Abstellen des Motors, sobald auf Grund der reduzierten Winkelgeschwindigkeit des Bremsbackenträgers die auf die Bremsbacke wirkende Zentrifugalkraft kleiner als die Federkraft wird, wirkt das durch die nun zunehmend anliegende Bremsbacke hervorgerufene und somit am Bremsbackenträger vorhandene Drehmoment zusätzlich hemmend. Ein Nachlaufen wird reduziert bzw. unwahrscheinlicher.

Da der Motor nur noch beim Anlaufen das durch die Zentrifugalbremse erzeugte Bremsmoment überwinden muss, können wesentlich kleinere und kostengünstigere Motoren zum Einsatz kommen. Der Energieaufwand beim Bewegen der Last reduziert sich ganz erheblich, da nicht mehr permanent gegen einen großen Widerstand gefahren werden muss. Ferner unterliegt die Bremse einem viel geringeren Verschleiß, nämlich hauptsächlich zu Beginn und Ende des Bewegens der Last. All dies reduziert die Kosten und gewährleistet ein hohes Maß an Sicherheit. Die Energieeffizienz der Anlage wird gesteigert, und die Erfindung dient somit auch dem Umweltschutz. Wird die Spindelsteigung vergrößert, kann entsprechend schneller gefahren werden.

Die abhängigen Ansprüche betreffen vorteilhafte Ausführungen und Weiterentwicklungen der Erfindung.

Konstruktiv kann sichergestellt werden, dass der Bremsbackenträger im Verhältnis zur Welle so schnell dreht, dass bei üblichen Wellendrehzahlen keinerlei Bremskraft mehr vorliegt, da dann auf Grund der Rotation des Bremsbackenträgers und somit auch der Bremsbacke die auf die Bremsbacke wirkende Zentrifugalkraft die durch das Federelement hervorgerufene Federkraft übersteigt. Dazu kann ein Getriebeelement vorhanden sein, das die Drehung der Welle ins Schnelle auf den Bremsbackenträger überträgt. Je größer das Drehzahlverhältnis zwischen Bremsbackenträger und Welle, bei desto geringeren Absolut-Drehzahlen der Welle liegt auf Grund der Zentrifugalkraft an der Bremsbacke keine Bremswirkung der Zentrifugalbremse mehr vor. Damit kann sichergestellt werden, dass der Motor zwar ein Anlaufmoment aufbringen muss, um die bei stillstehender Welle wirkende Bremskraft zu überwinden, schon kurz nach Erreichen einer relativ niedrig liegenden Grenzdrehzahl der Welle aber keinerlei Bremswirkung der Zentrifugalbremse mehr vorliegt. Mithin kann die vom Motor zur Verfügung gestellte Leistung schon nach sehr kurzer Zeit zu einem maximalen Anteil für ein gewünschtes Bewegen der Last verwendet werden. Beim Abstellen des Motors setzt die das Abstellen unterstützende Bremskraft erst bei der relativ niedrig liegenden Grenzdrehzahl der Welle ein, womit ein vorzeitiges ungewolltes Abbremsen verhindert wird. Da somit die Bremskraft nur während des kurzen Anlaufens und Abstellens wirkt, wird zum einen die Energieeffizienz maximiert, das Anlaufen und Abstellen präzisiert und der an der Bremse auftretende Verschleiß minimiert.

Weiterhin kann das Getriebeelement ein Planetengetriebe sein, das mindestens zwei Planetenräder aufweist, die mittels eines umlaufenden Planetenträgers verbunden sind und ein Sonnenrad aufweist, wobei die Drehung der Welle dem Planetenträger direkt eingeprägt ist und das Sonnenrad fest mit dem Bremsbackenträger verbunden ist und der stets feststehende Bremsring gleichzeitig als Hohlrad dient. Das Hohlrad bildet hierbei das gestellfeste Abstützglied des Planetengetriebes. Das kompakt bauende Planetengetriebe kann also dazu dienen, die Drehzahl der Welle ins Schnelle auf den Bremsbackenträger zu übertragen. Dabei entspricht die Drehzahl der Welle der Drehzahl des Planetenträgers. Die auf dem umlaufenden Planetenträger befindlichen Planetenräder wälzen sich am Inneren des feststehenden Hohlrades ab, womit der Bremsring auf seiner Innenseite die Funktion des Hohlrades übernimmt, während sich an der Außenseite des Bremsrings die Bremsbacken abstützen können. Das Sonnenrad wird durch die sich am Inneren des Hohlrades abwälzenden Planetenräder ebenfalls in Drehung versetzt. Durch die vorhandene feste Verbindung überträgt sich die Drehung des Sonnenrades genau auf den Bremsbackenträger und somit auch auf die Bremsbacke. Vorteilhaft bei Erfüllung der gewünschten Übersetzung ins Schnelle ist die kompakte Bauweise des Planetengetriebes, das auch leicht an einem Ende der Welle angebracht werden kann. Durch Festlegen des Verhältnisses zwischen Hohlraddurchmesser und Sonnenraddurchmesser, bzw. des Verhältnisses der Radien der Wälzkreise von Hohlrad zu Sonnenrad oder der jeweiligen Zähnezahl, lässt sich die gewünschte Übersetzung leicht einstellen. Es können somit leicht die gewünschten kleinen Werte für die Übersetzung realisiert werden, und eine Ausführung von Welle und Planetenträger koaxial mit Sonnenrad, Bremsbackenträger und Bremsring (Hohlrad) ist möglich. Bauartbedingt erzielt man eine gleichmäßige Kraftübertragung ohne Biegekräfte auf die Welle. Entsprechend günstig dimensioniert können die Lager sein.

Weiterhin kann das Getriebeelement und damit das Planetengetriebe Zahnräder aufweisen. Die Kraftübertragung des Zahnrad-Planetengetriebes erfolgt mithin formschlüssig. Dadurch kann Schlupf vermieden und der Wirkungsgrad gesteigert werden, ferner ist der Verschleiß gering. Alle benötigten Teile sind prinzipiell bekannt und können entsprechend günstig gefertigt werden. Da hier besonders große Kräfte und Momente übertragen werden können, kann besonders platzsparend gebaut werden. Auf sehr kleinem Volumen kann eine sehr große Leistung umgesetzt werden.

Weiterhin kann das Getriebeelement und damit das Planetengetriebe statt Zahnrädern Reibräder aufweisen. Die Kraftübertragung des Reibrad-Planetengetriebes erfolgt mithin kraftschlüssig. Dadurch können die Fertigungskosten weiter reduziert werden. Auch die Flexibilität erhöht sich. Beim Zahnrad-Planetengetriebe ergeben sich durch das Festlegen der Zähnezahl bestimmte Einbaubedingungen bzw. es sind bestimmte Montierbarkeitsbedingungen zu erfüllen. Mit der Montage des ersten Planetenrades ist die Lage der beiden Zentralräder relativ zueinander festgelegt. Zur Montage weiterer Planetenräder sind dann bestimmte Winkelbedingungen einzuhalten, woraus bei gewünschter gleichmäßiger Verteilung der Planetenräder Zähnezahlbedingungen resultieren. Im Falle des Reibrad-Planetengetriebes fallen diese Bedingungen naturgemäß weg. Damit unterliegt auch die Zahl der Planetenräder weniger Zwangsbedingungen und kann somit freier - der physikalischen Beanspruchung entsprechend - gewählt werden. Es können relativ viele Planetenräder zum Einsatz kommen, und das auf sie wirkende Drehmoment sowie die auf sie wirkenden Kräfte können gleichmäßig entsprechend der Planetenradzahl verteilt werden, so dass bei einer großen Planetenradzahl das einzelne Planetenrad einer entsprechend reduzierten Belastung unterliegt. Eine große Planetenradzahl kann insbesondere bei Materialien mit geringen Reibwerten sinnvoll sein.

Darüber hinaus kann das Getriebeelement mindestens einen ersten Keilriemen und mindestens eine erste Riemenscheibe und eine zweite Riemenscheibe aufweisen. Es liegt dann also ein kraftschlüssiges Zugmittelgetriebe vor, das ins Schnelle übersetzt. Durch diese besonders einfache Bauweise lassen sich die Kosten weiter reduzieren und Verschleißteile besonders leicht tauschen. Da der Achsabstand der Riemenscheiben keinen Einfluss auf die Übersetzung hat, ist ein hohes Maß an konstruktiven Freiheiten gewährleistet, und damit kann auch eventuellen äußeren Vorgaben besonders gut Rechnung getragen werden.

Weiterhin kann das Zugmittelgetriebe zweistufig ausgeführt sein und den ersten Keilriemen und einen zweiten Keilriemen aufweisen und die erste Riemenscheibe, die zweite Riemenscheibe, eine dritte Riemenscheibe und eine vierte Riemenscheibe aufweisen, die zusammen zweistufig jeweils eine Übersetzung ins Schnelle bewirken. Die erste und vierte Riemenscheibe sowie die zweite und dritte Riemenscheibe können dabei jeweils koaxial angeordnet sein, wobei die zweite und dritte Riemenscheibe jeweils mit einer gemeinsamen Zugmittelgetriebewelle verbunden sind und die erste und vierte Riemenscheibe zwar koaxial angeordnet, aber unterschiedlich gelagert sind. Durch die Wahl des Durchmessers der jeweiligen Riemenscheibe lässt sich dann die Übersetzung in gewünschter Weise einstellen. Die Übersetzung kann also vorteilhaft von allen vier Riemenscheiben bestimmt werden. Der Achsabstand übt weiterhin keinen Einfluss auf die Übersetzung aus. Damit werden die gestalterischen Freiheiten maximiert.

Weiterhin kann die vierte Riemenscheibe fest mit dem Bremsbackenträger verbunden sein. Ihre Drehzahl entspricht dann exakt der Drehzahl des Bremsbackenträgers. Es kann auch mit dem Zugmittelgetriebe die vorteilhafte kompakte Bauform erreicht werden, bei der Welle, Bremsbackenträger und Bremsring koaxial angeordnet sind.

Darüber hinaus kann der Bremsbackenträger als Rotationsachse eine Hauptträgheitsachse besitzen, die gleichzeitig die Rotationsachse der Welle ist. Dies ermöglicht eine platzsparende Bauweise und ein Minimieren der Lagerkräfte, weshalb kleinere und günstigere Lager zum Einsatz kommen können.

Ferner kann bei einem Hebebühnenantrieb mit einem Motor, einer vom Motor antreibbaren Spindel, einer keine Rotation ausführenden Mutter und einem mit der Mutter verbundenen Tragarm zur Aufnahme einer Last die oben beschriebene Zentrifugalbremse vorhanden sein, wobei die Rotationsachse der Welle der Rotationsachse der Spindel entspricht und die Zentrifugalbremse bei stehendem Motor ein Bewegen der Last verhindert, indem sie ein Drehen der Spindel verhindert. Die kompakte, kostengünstige Zentrifugalbremse kann dann verlässlich ein unerwünschtes Bewegen der Last verhindern. Soll die Last bewegt werden, muss der Motor lediglich ein Anlaufmoment überwinden, da schon bei einer relativ niedrigen Drehzahl der Spindel gewährleistet ist, dass der Bremsbackenträger so schnell dreht, dass keinerlei Bremsmoment mehr vorliegt. Die vorhandene Antriebsleistung des Motors kann dann weitestgehend zum Bewegen der Last verwendet werden. Das Abstellen des Motors wird durch eine mit der Reduktion der Drehzahl der Spindel zunehmende Bremsleistung unterstützt. Die Zentrifugalbremse ist damit in der Lage, ein ungewünschtes Bewegen der Last zu verhindern, da sie die stillstehende Spindel sicher im Ruhezustand hält. Nach Überwinden der kurzen Anlaufphase übt die Zentrifugalbremse keinerlei Bremskraft mehr aus. Es tritt somit erheblich weniger Verschleiß auf, und die Energieeffizienz der Anlage steigert sich gegenüber vergleichbaren Anlagen mit dauerhaft wirkenden Bremssystemen. Die Koordination von Bremsleistung mit der Wellendrehzahl geschieht bei der Zentrifugalbremse automatisch. Der Verschleiß an der Zentrifugalbremse beschränkt sich auf ein Minimum. Sie ist nur während des Haltens sowie des kurzen Anlaufens und Abstellens aktiv. Die Zentrifugalbremse kann in günstiger Weise mit vorhandenen Teilen des Hebebühnenantriebs kombiniert werden, die dann kosten- und platzsparend eine Doppelfunktion ausüben. Wird die Spindelsteigung vergrößert, kann entsprechend schneller gefahren werden.

Die Erfindung wird beispielhaft im Folgenden an Hand von schematischen Zeichnungen näher erläutert. Es zeigen:
- Figur 1:: Ansicht von Spindel, Motor und Planetengetriebe
- Figur 2:: Ansicht von Spindel, Motor und Zugmittelgetriebe

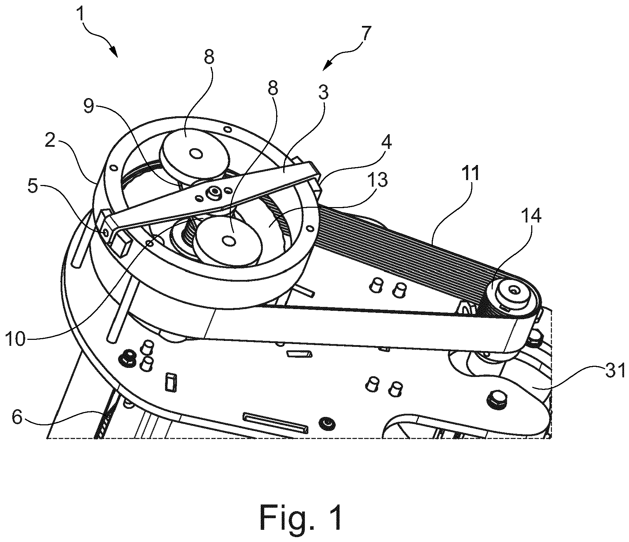

Figur 1 zeigt eine Zentrifugalbremse 1 für einen Hebebühnenantrieb mit einer drehbaren Welle 6, einem stets feststehenden Bremsring 2 und einem umlaufenden Bremsbackenträger 3, der mit der Welle 6 verbunden ist und mindestens eine Bremsbacke 4 und mindestens ein Federelement 5 aufweist. Zum Halten der stillstehenden Welle 6 übt am dann stillstehenden Bremsbackenträger 3 das Federelement 5 auf die bewegliche Bremsbacke 4 eine Kraft in Richtung des stets feststehenden Bremsringes 2 aus, die im Wesentlichen entgegengesetzt zu der auf die Bremsbacke 4 wirkende Zentrifugalkraft ist, die aus einer Drehung des Bremsbackenträgers 3 resultiert.

Zunächst wird der ruhende Fall beschrieben, in dem die Zentrifugalbremse 1 die stillstehende Welle 6 hält. Das mit dem Bremsbackenträger 3 fest verbundene Federelement 5 übt permanent eine Federkraft auf die mit dem Bremsbackenträger 3 verschiebbar verbundene Bremsbacke 4 aus. Die Federkraft bewirkt, dass die Bremsbacke 4 gegen den stets feststehenden Bremsring 2 gedrückt wird. Das Bremsen erfolgt mithin mechanisch. Das Federelement 5 kann eine oder mehrere Federn beinhalten. Durch Dimensionierung und Auslegungunter Berücksichtigung verschiedener Materialien - des Federelementes 5 samt Federn, der Bremsbacke 4 und des feststehenden Bremsringes 2 lässt sich die gewünschte Bremskraft einstellen. Denkbar ist auch, dass der Bremsbackenträger 3 mehrere Bremsbacken 4 aufweist, an denen sämtlich die entsprechende Bremskraft wirkt. Der Bremsbackenträger 3 kann etwa zwei, drei, vier, fünf oder mehr Arme aufweisen, an deren Ende sich jeweils eine Bremsbacke 4 befindet. Auch ist denkbar, dass sich am Ende jeden Armes des Bremsbackenträgers 3 zwei oder mehrere Bremsbacken 4 befinden, auf die die jeweilige Federkraft von einem oder mehreren Federelementen 5 wirkt. Die Arme des Bremsbackenträgers 3 können dabei gleichmäßig über den Vollkreis verteilt sein. Auch ist denkbar, dass der Bremsbackenträger 3 den feststehenden Bremsring 2 an dessen Außenseite gänzlich umfasst.

Im ruhenden Fall übt also jede Bremsbacke 4 eine Bremskraft in Form einer Haltekraft aus, die unter Berücksichtigung des Radius der Außenfläche des feststehenden Bremsringes 2 einem Haltemoment entspricht, das am Bremsbackenträger 3 anliegt. Sind mehrere Bremsbacken 4 vorhanden, erhöht sich die Bremskraft und das Haltemoment entsprechend. Sind die Bremsbacken 4 symmetrisch zur Rotationsachse des Bremsbackenträgers 3 angeordnet, können Ungleichheiten besonders gut ausgeglichen werden, wie sie etwa auf Grund von Fertigungstoleranzen vorhanden sein mögen - zum Beispiel bei den Federelementen 5. Sind zwei oder mehr Bremsbacken 4 gleichmäßig über den Vollkreis verteilt, kann gewährleistet werden, dass senkrecht zur Rotationsachse auch bei Drehung des Bremsbackenträgers 3 keine Kräfte auftreten, die von Lagern gehalten werden müssten.

Der Bremsbackenträger 3 kann somit ein definiertes Haltemoment aufweisen, und Querkräfte senkrecht zu seiner Rotationsachse können vermieden werden. Der Bremsbackenträger 3, der mit der Welle 6 verbunden ist, kann somit entsprechend grundlegender mechanischer Zusammenhänge gewährleisten, dass auf Grund des am Bremsbackenträger 3 anliegenden Bremsmomentes die Zentrifugalbremse 1 die stillstehende Welle 6 sicher hält.

Da der Bremsbackenträger 3 mit der Welle 6 verbunden ist, rotiert der Bremsbackenträger 3, wenn die Welle 6 rotiert. Somit rotiert auch die Bremsbacke 4, wenn die Welle 6 rotiert. Die Bremsbacke 4 ist mit dem Bremsbackenträger 3 gerade so verschiebbar verbunden, dass sie im Wesentlichen in radialer Richtung senkrecht zur Rotationsachse des Bremsbackenträgers 3 verschiebbar ist. Die Federkraft des Federelementes 5 bewirkt, dass die Bremsbacke 4 im Wesentlichen in radialer Richtung senkrecht zur Rotationsachse des Bremsbackenträgers 3 nach innen bewegt wird. Bei Rotation der Bremsbacke 4 mit dem Bremsbackenträger 3 wirkt auf die Bremsbacke 4 eine Zentrifugalkraft. Deren Wirkung bewegt die Bremsbacke 4 in radialer Richtung senkrecht zur Rotationsachse des Bremsbackenträgers 3 nach außen. Die Zentrifugalkraft ist proportional zum Produkt aus Abstand der Bremsbacke 4 von der Rotationsachse des Bremsbackenträgers 3 und dem Quadrat der Winkelgeschwindigkeit des Bremsbackenträgers 3.

Ab einer gewissen Grenzdrehzahl des Bremsbackenträgers 3 übersteigt die auf die Bremsbacke 4 wirkende Zentrifugalkraft die im Wesentlichen entgegengesetzt wirkende Kraft des Federelementes 5. Die Bremsbacke 4 wird somit in radialer Richtung senkrecht zur Rotationsachse des Bremsbackenträgers 3 nach außen bewegt und löst sich vom feststehenden Bremsring 2. Damit ist dann keinerlei Bremskraft mehr vorhanden.

Vorteil der Erfindung ist somit, dass zum Halten der Welle 6 automatisch die maximale Bremskraft und somit das maximale Haltemoment wirkt, wohingegen bei drehender Welle 6, wenn die Grenzdrehzahl des Bremsbackenträgers 3 überschritten wird, keinerlei Bremskraft mehr wirkt. Das Wirken der Bremskraft ist quasi automatisch in gewünschter Weise an die Drehzahl der Welle 6 gekoppelt und macht alle weiteren Bremssysteme, die ein sicheres Halten gewährleisten könnten, überflüssig. Bei Rotation im Nennbereich der Welle 6 schaltet sich die Bremswirkung der Zentrifugalbremse 1 quasi automatisch ab, wenn die Grenzdrehzahl des Bremsbackenträgers 3 bei Rotation im Nennbereich der Welle 6 überschritten wird. Steuerung und Regelung weiterer Bremssysteme entfallen somit komplett, und im gewöhnlichen Betrieb entstehen durch das System keinerlei ungewünschte Effekte.

Bei Erhöhung der Drehzahl der Welle 6 aus dem Stillstand heraus muss zusätzlich das Haltemoment überwunden werden. Der entsprechende Antrieb ist so zu dimensionieren, dass das dazu notwendige Anlaufmoment aufgebracht werden kann. Sobald auf Grund der Rotation der Welle 6 die Grenzdrehzahl des Bremsbackenträgers 3 überschritten wird, liegt keine Bremswirkung durch die Zentrifugalbremse 1 mehr vor, und somit wird die Antriebsleistung des Motors auch nicht durch die Bremswirkung reduziert.

Bei Reduktion der Drehzahl der Welle 6 setzt, sobald die Grenzdrehzahl des Bremsbackenträgers 3 unterschritten wird, eine mit Abnehmen der Winkelgeschwindigkeit des Bremsbackenträgers 3 zunehmende Bremskraft ein. Das Wirken der Bremskraft ist auch hier quasi automatisch in gewünschter Weise an die Drehzahl der Welle 6 gekoppelt, da die Zentrifugalbremse 1 das Abstellen des Antriebs unterstützt und ein Nachlaufen sicher verhindert.

Die Zentrifugalbremse 1 sichert somit zuverlässig eine stillstehende Welle 6. Um die Welle 6 in Rotation versetzen zu können, muss das entsprechende Bremsmoment zusätzlich als Anlaufmoment aufgebracht werden. Ab Überschreiten einer Grenzdrehzahl liegt keinerlei Bremswirkung durch die Zentrifugalbremse 1 mehr vor. Das Abschalten des Antriebs wird durch die Zentrifugalbremse 1 unterstützt, da diese mit Unterschreiten der Grenzdrehzahl ein zusätzliches Bremsmoment ausübt, das die Rotation der Welle 6 reduziert.

Es kann ein Getriebeelement 7 vorhanden sein, das die Drehung der Welle 6 ins Schnelle auf den Bremsbackenträger 3 überträgt. Die Übersetzung i₆₃ ist hier definiert als Betrag des Quotienten aus Drehzahl der Welle 6 zu Drehzahl des Bremsbackenträgers 3 und somit eine positive Zahl, die kleiner eins ist. Je weiter die Übersetzung i₆₃ von eins entfernt ist, desto höher ist die Drehzahl des Bremsbackenträgers 3 im Vergleich zur Drehzahl der Welle 6. Da die auf die Bremsbacke 4 wirkende Zentrifugalkraft proportional zum Produkt aus Abstand der Bremsbacke 4 von der Rotationsachse des Bremsbackenträgers 3 und dem Quadrat der Winkelgeschwindigkeit des Bremsbackenträgers 3 ist, hat eine Steigerung der Winkelgeschwindigkeit des Bremsbackenträgers 3 einen überproportionalen Effekt auf die Abnahme der Bremskraft der Zentrifugalbremse 1 bei Drehung der Welle 6. Entsprechend der Übersetzung i₆₃ kann sichergestellt werden, dass die Grenzdrehzahl des Bremsbackenträgers 3 bei Rotation im Nennbereich der Welle 6 überschritten wird. Je weiter die Übersetzung i₆₃ von eins entfernt ist, desto früher wird dieses Überschreiten erreicht. Damit ist umso eher gewährleistet, dass bei Rotation im Nennbereich der Welle 6 keinerlei Bremskraft mehr durch die Zentrifugalbremse 1 ausgeübt wird. Da, ohne das Berücksichtigen von Verlusten, auf Grund der Leistungsbilanz das Produkt aus Drehmoment und Drehzahl konstant bleibt, bewirkt die Übersetzung ins Schnelle, dass das am Bremsbackenträger 3 anliegende Drehmoment kleiner ist als das an der Welle 6 anliegende Drehmoment. Das ermöglicht eine entsprechend kleine Dimensionierung der Zentrifugalbremse 1 und aller ihrer Elemente. Da - siehe oben - die auf die Bremsbacke 4 wirkende Zentrifugalkraft proportional zum Produkt aus Abstand der Bremsbacke 4 von der Rotationsachse des Bremsbackenträgers 3 und dem Quadrat der Winkelgeschwindigkeit des Bremsbackenträgers 3 ist, hat eine Steigerung der Winkelgeschwindigkeit des Bremsbackenträgers 3 den Effekt, dass die Armlänge des Bremsbackenträgers 3 reduziert werden kann. Eine durch das Federelement 5 vorgegebene Federkraft wird bei entsprechender Steigerung der Winkelgeschwindigkeit durch die Zentrifugalkraft schon im entsprechend reduzierten Abstand der Bremsbacke 4 von der Rotationsachse des Bremsbackenträgers 3 erreicht. Die Dimensionierung der Zentrifugalbremse kann daher entsprechend reduziert werden.

Die Zentrifugalbremse 1 kann als Getriebeelement 7 ein Planetengetriebe aufweisen, das mindestens zwei Planetenräder 8 aufweist, die mittels eines umlaufenden Planetenträgers 9 verbunden sind, und ein Sonnenrad 10 aufweist, wobei die Drehung der Welle 6 dem Planetenträger 9 direkt eingeprägt ist und das Sonnenrad 10 fest mit dem Bremsbackenträger 3 verbunden ist und der stets feststehende Bremsring 2 zusätzlich als Hohlrad dient. Im Planetengetriebe bildet also das Hohlrad das gestellfeste Abstützglied. Das Planetengetriebe bietet als Vorteil eine kompakte, günstige und symmetrische Bauform, die als weiteren Vorteil eine koaxiale Lage von Antriebswelle und Abtriebswelle ermöglicht, wodurch sich unter anderem die mögliche Doppelfunktion des stets feststehenden Bremsringes 2 als Hohlrad ergibt. Drehmoment und Leistung können auf mehrere Planetenräder 8 gleichmäßig verteilt werden. Da im Wesentlichen das an den Planetenrädern 8 anliegende Gesamtdrehmoment und die an den Planetenrädern 8 angreifende Gesamtkraft unabhängig von der Zahl der Planetenräder 8 ist, kann das am einzelnen Planetenrad 8 wirkende Drehmoment und die am einzelnen Planetenrad 8 wirkende Kraft mittels Steigerung der Zahl der Planetenräder 8 entsprechend reduziert werden. Das Planetengetriebe ermöglicht im Vergleich zu einem entsprechenden Vorgelegegetriebe kleinere Zahngeschwindigkeiten, kleinere Zahnkräfte und insgesamt eine platzsparende Bauweise. Positiv sind auch geringe Schwungmassen und ein geräuscharmer Lauf. Bei Vorhandensein von zwei oder mehr Planetenrädern 8, die gleichförmig verteilt sind, treten auch im Betrieb keine Querkräfte senkrecht zur Hauptrotationsachse auf.

Der stets feststehende Bremsring 2 kann also eine Doppelfunktion übernehmen. Gegen seine Außenseite können sich die Bremsbacken 4 stützen, während sich auf seiner Innenseite die Planetenräder 8 abwälzen. Die Planetenräder 8 sind mittels des Planetenträgers 9 verbunden. Der umlaufende Planetenträger 9 wiederum ist fest mit der Welle 6 verbunden, so dass eine Drehung der Welle 6 dem Planetenträger 9 direkt eingeprägt ist. Bei einer Drehung des Planetenträgers 9 bewirken die Planetenräder 8, dass sich das Sonnenrad 10 ebenfalls dreht. Da die Drehung des Sonnenrades 10 schneller ist als die Drehung des Planetenträgers 9, erfolgt eine Übersetzung ins Schnelle. Das Sonnenrad 10 wiederum ist fest mit dem Bremsbackenträger 3 verbunden. Die Übersetzung i₆₃, definiert als Betrag des Quotienten aus Drehzahl der Welle 6 zu Drehzahl des Bremsbackenträgers 3, ist somit weiterhin eine positive Zahl, die kleiner eins ist.

Die gewünschte Übersetzung i₆₃ kann dabei sehr vorteilhaft in einfacher Weise unter Zugrundelegen des Zähnezahlverhältnisses von Hohlrad zu Sonnenrad 10 bzw. analog unter Zugrundelegen des Verhältnisses der Radien der Wälzkreise von Hohlrad zu Sonnenrad 10 gewählt werden.

Neben der eben beschriebenen Form eines einfachen Planetengetriebes sind auch zum Beispiel zusammengesetzte Planetengetriebe denkbar, die die entsprechende Übersetzung ins Schnelle liefern. Neben dem gezeigten einfachen Planetengetriebe können auch Planetengetriebe, die zum Beispiel mehrere Sonnenräder und gestufte Planetenräder aufweisen, zum Einsatz kommen.

Das Getriebeelement 7 kann Zahnräder aufweisen, und es kann somit ein Zahnrad-Planetengetriebe vorhanden sein. Das Zahnrad-Planetengetriebe bietet neben den schon beschriebenen Vorteilen des Planetengetriebes den Vorteil, dass der Schlupf minimiert wird. Die Kraftübertragung erfolgt formschlüssig, und bei Verwendung entsprechender Materialien kann sehr kompakt gebaut werden. Neben den allgemeinen Vorteilen, die eine kompakte Bauweise bietet, kann die Zentrifugalbremse 1 daher auch besser nachgerüstet werden, da sie insgesamt nur wenig Volumen benötigt und damit auch an Stellen platziert werden kann, an denen sie ursprünglich nicht vorgesehen war.

Das Getriebeelement 7 kann alternativ Reibräder aufweisen, und es kann somit ein Reibrad-Planetengetriebe vorhanden sein, bei dem die Kraftübertragung kraftschlüssig erfolgt. Das Reibrad-Planetengetriebe bietet den weiteren Vorteil, dass die Fertigungskosten gesenkt werden können und die Flexibilität der Auslegung gesteigert werden kann. Durch den Wegfall der Verzahnung kann zum einen die Fertigung günstiger erfolgen. Zum anderen erlangt man bei der Auslegung eine größere Flexibilität. Müssen bei Zahnrad-Planetengetrieben bei Vorhandensein von mehr als einem Planetenrad 8 eine Reihe von Winkel- und Zahnbedingungen, die sich nur auf Grund der Verzahnung ergeben, eingehalten werden, so können bei Reibrad-Planetengetrieben die Planetenräder 8 wesentlich freier angeordnet werden. Zwar sind die an einem einzelnen Planetenrad 8 übertragbaren Momente und Kräfte bei Reibrädern geringer als bei Zahnrädern, möchte man aber mehrere Planetenräder 8, zum Beispiel sechs verwenden, so müssen bei Reibrad-Planetengetrieben die teilweise einschränkenden Zahnbedingungen naturgemäß nicht berücksichtigt werden.

Das Getriebeelement 7 kann ein Keilriemengetriebe sein, bei dem die Kraftübertragung kraftschlüssig erfolgt. Das Getriebeelement 7 kann hierzu mindestens einen ersten Keilriemen 11 und mindestens eine erste Riemenscheibe 13 und eine zweite Riemenscheibe 14 aufweisen. Die erste Riemenscheibe 13 ist dabei fest mit der Welle 6 verbunden. Entsprechend dem Verhältnis der Radien der ersten Riemenscheibe 13 zur zweiten Riemenscheibe 14 bestimmt sich das Verhältnis der Drehzahlen der zweiten Riemenscheibe 14 zur ersten Riemenscheibe 13 und somit der Kehrwert der Übersetzung. Da auf Grund der Keilwirkung ein Reibwert deutlich über eins erzielt werden kann, lassen sich Kräfte und Momente sicher übertragen. Auch das Keilriemengetriebe baut sehr kompakt und ist darüber hinaus in seiner zulässigen Gestaltung sehr flexibel. Als weiterer Vorteil ergibt sich die gute Überprüfbarkeit des Zustandes und das leichte Wechseln sämtlicher Teile bei Bedarf. Grundsätzlich zeichnet es sich durch einen besonders ruhigen und geräuscharmen Lauf aus. Bei allgemein sehr geringen Kosten ist gleichzeitig eine hohe Flexibilität der Achspositionen der ersten Riemenscheibe 13 und der zweiten Riemenscheibe 14 möglich. Weitere Flexibilität in der Gestaltung wird erreicht, da die Übersetzung nur aus dem Verhältnis der Radien der zweiten Riemenscheibe 14 zur ersten Riemenscheibe 13 folgt, und somit der Abstand der beiden Riemenscheiben für die Übersetzung keinerlei Bedingungen unterliegt. Die Achsabstände der Riemenscheiben sind für die Übersetzung unerheblich. Das Keilriemengetriebe hat nur ein geringes Gewicht und ein geringes Massenträgheitsmoment. Es läuft also schnell an und weist kein unerwünschtes Nachlaufen auf. Auch denkbar sind grundsätzlich formschlüssige Zugmittelgetriebe wie etwa Zahnriemengetriebe. Diese können zum Beispiel den eventuell vorhandenen Schlupf reduzieren.

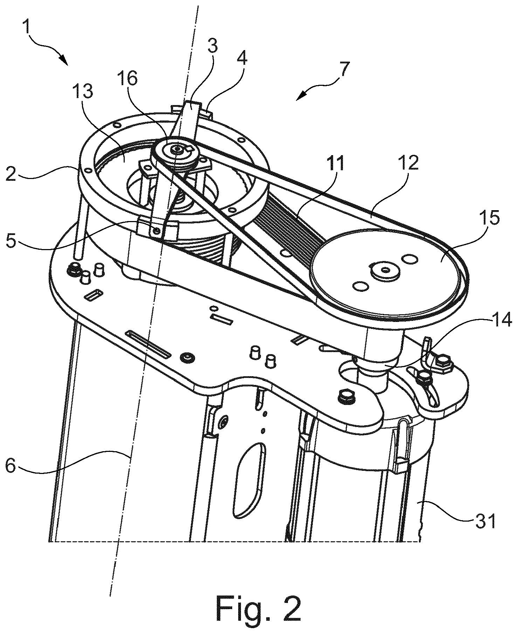

Das Getriebeelement 7 kann als Keilriemengetriebe den ersten Keilriemen 11 und einen zweiten Keilriemen 12 aufweisen und ferner die erste Riemenscheibe 13, die zweite Riemenscheibe 14, eine dritte Riemenscheibe 15 und eine vierte Riemenscheibe 16 aufweisen, die zusammen zweistufig jeweils eine Übersetzung ins Schnelle bewirken. Wie in Figur 2 gezeigt, kann die Welle 6 mit der ersten Riemenscheibe 13 starr verbunden sein, so dass sich die jeweiligen Drehzahlen entsprechen. Der erste Keilriemen 11 verbindet die erste Riemenscheibe 13 mit der zweiten Riemenscheibe 14. Entsprechend dem Verhältnis der Radien der zweiten Riemenscheibe 14 zur ersten Riemenscheibe 13 bestimmt sich die erste Teilübersetzung. Die dritte Riemenscheibe 15 ist mit der zweiten Riemenscheibe 14 fest verbunden, so dass sich die jeweiligen Drehzahlen entsprechen. Die dritte Riemenscheibe 15 ist über den zweiten Keilriemen 12 mit der vierten Riemenscheibe 16 verbunden. Entsprechend dem Verhältnis der Radien der vierten Riemenscheibe 16 zur dritten Riemenscheibe 15 bestimmt sich die zweite Teilübersetzung. Die Gesamtübersetzung ist das Produkt der ersten und der zweiten Teilübersetzung. Die Gestaltungsmöglichkeit wird also weiter gesteigert, da nun alle vier Radien der vier Riemenscheiben als Parameter für die Gesamtübersetzung Verwendung finden. Während sich die dritte Riemenscheibe 15 und die zweite Riemenscheibe 14 stets eine Rotationsachse teilen, ist dies im Falle der ersten Riemenscheibe 13 und der vierten Riemenscheibe 16 optional. Dadurch kann eine besonders kompakte Bauweise erreicht werden, alternativ kann eine anderen Kriterien für die Positionierung der vierten Riemenscheibe 16 gehorchende Vorgabe ebenfalls besonders leicht umgesetzt werden.

Die vierte Riemenscheibe 16 kann mit dem Bremsbackenträger 3 fest verbunden sein, so dass sich die jeweiligen Drehzahlen entsprechen. Die gewünschte Übersetzung i₆₃ zwischen der Welle 6 und dem Bremsbackenträger 3 kann somit leicht eingestellt werden. Auch im Falle des Keilriemengetriebes kann somit die äußerst kompakte und günstige koaxiale Anordnung von Welle 6, erster Riemenscheibe 13, vierter Riemenscheibe 16, Bremsring 2 und Bremsbackenträger 3 erreicht werden. Hierdurch wird auch eine Sichtprüfung erleichtert, da sich wesentliche Teile der Zentrifugalbremse 1 in einem Schritt kontrollieren lassen.

Eine besonders kompakte Bauform kann erzielt werden, wenn die Rotationsachse der Welle 6 der Rotationsachse des Bremsbackenträgers 3 entspricht und der Bremsbackenträger 3 so gestaltet ist, dass sich die Rotationsachse mit einer seiner Hauptträgheitsachsen deckt. Auch müssen bei einer Drehung des Bremsbackenträgers 3 dann keinerlei aus der Drehung resultierende Querkräfte senkrecht zu seiner Rotationsachse von Lagern gehalten werden.

Wie in Figur 1 und Figur 2 gezeigt, kann ein Hebebühnenantrieb 30 mit einem Motor 31, einer vom Motor 31 antreibbaren Spindel 32, einer keine Rotation ausführenden Mutter 33, einem mit der Mutter 33 verbundenen Tragarm 34 zur Aufnahme einer Last und der Zentrifugalbremse 1 vorhanden sein, wobei die Rotationsachse der Welle 6 der Rotationsachse der Spindel 32 entspricht und die Zentrifugalbremse 1 bei stehendem Motor 31 ein Bewegen der Last verhindert, indem sie ein Drehen der Spindel 32 verhindert.

Wie in Figur 1 gezeigt, kann es einer gewünschten sehr kompakten Bauform dienlich sein, wenn die Zentrifugalbremse 1 am Ende der Welle 6, beziehungsweise der Spindel 32, montiert ist. Im Falle des Planetengetriebes ist der umlaufende Planetenträger 9 fest mit der Welle 6 verbunden, so dass eine Drehung der Welle 6 dem Planetenträger 9 direkt eingeprägt ist und sich die jeweiligen Drehzahlen entsprechen. Im Falle des Keilriemengetriebes kann die erste Riemenscheibe 13 fest mit der Welle 6 verbunden sein, so dass sich die jeweiligen Drehzahlen entsprechen. Um nun das notwendige Anlaufdrehmoment aufbringen zu können, um die zunächst stillstehende Welle 6 in Drehung zu versetzen, kann am gleichen Ende der Welle 6, beziehungsweise der Spindel 32, das notwendige Anlaufmoment - sowie der weitere Antrieb - mittels einer Motorverbindung vom Motor 31 bereitgestellt werden. Der Motor 31 treibt über die auch im Falle des Planetengetriebes vorhandene zweite Riemenscheibe 14 mittels des ersten Keilriemens 11 die erste Riemenscheibe 13 an. Die ersten Riemenscheibe 13 kann auch im Falle des Planetengetriebes eine Doppelfunktion erfüllen, da sie im Falle des Planetengetriebes zusätzlich die Funktion des umlaufenden Planetenträgers 9 übernehmen kann. Hierzu werden die Planetenräder 8 direkt auf der ersten Riemenscheibe 13 montiert. Auf jeden Fall kann, wenn die erste Riemenscheibe 13 für den Antrieb vorhanden ist, die Verbindung zwischen Welle 6 und umlaufendem Planetenträger 9 konstruktiv erleichtert werden.

Wie in Figur 2 gezeigt, kann im Falle des Keilriemengetriebes die aus zweiter Riemenscheibe 14, erstem Keilriemen 11 und erster Riemenscheibe 13 bestehende Motorverbindung komplett in Doppelfunktion verwendet werden. Nämlich einmal, um im Betrieb die Verbindung des Motors 31 mit der Spindel 32 herzustellen und zum anderen als erstes der insgesamt zum Beispiel zwei Teilgetriebe des Keilriemengetriebes. Das gesamte zuvor beschriebene Keilriemengetriebe benötigt dann also in seiner Umsetzung zusätzlich zu der bestehenden Motorverbindung lediglich die dritte Riemenscheibe 15, die vierte Riemenscheibe 16, den zweiten Keilriemen 12 und die Verbindung zum Bremsbackenträger 3.

Bei Verwendung der Zentrifugalbremse 1 in dem Hebebühnenantrieb 30 kann eine Last sicher gehalten werden, da bei stillstehender Spindel 32 die Zentrifugalbremse 1 ein am Bremsbackenträger 3 anliegendes Bremsmoment auf die Spindel 32 überträgt, so dass eine Drehung der Spindel 32 sicher verhindert wird, wie sie ansonsten etwa durch das Vorhandensein einer Last induziert werden könnte. Die Zentrifugalbremse 1 kann dabei so gestaltet sein, dass sie entweder ein Planetengetriebe oder aber ein Keilriemengetriebe zum Übertragen des am Bremsbackenträger 3 anliegenden Bremsmomentes auf die Spindel 32 verwendet.

Durch die Wirkung der Zentrifugalbremse 1 muss der Motor 31 nur noch ein Anlaufmoment überwinden, um die zunächst stillstehende Spindel 32 in Rotation versetzen zu können. Die Zentrifugalbremse 1 ist so gestaltet, dass schon bevor die Spindel ihre im normalen Betrieb anliegende Drehzahl erreicht, die Drehung des Bremsbackenträgers 3 so schnell ist, dass keinerlei Bremsmoment mehr vorhanden ist. Bis auf geringe weitere dem Antrieb eingeprägte Verluste kann so die gesamte von Motor 31 zur Verfügung gestellte Leistung zum Bewegen der Last verwendet werden, weshalb die Energieeffizienz des Hebebühnenantriebes 30 sehr hoch ist. Bei abnehmender Drehzahl des Motors 31 verlangsamt sich auch die Drehung des Bremsbackenträgers 3, sodass das Abstellen des Motors durch ein zusätzlich einsetzendes Bremsmoment, hervorgerufen durch die nun anliegenden Bremsbacken 4, unterstützt wird. Der Motor 31 kann damit wesentlich kleiner und kostengünstiger gestaltet werden als wenn er permanent gegen ein dauerhaft wirkendes Bremssystem fahren muss. Auf zusätzlich große und sehr starkem Verschleiß unterliegende, dauerhaft wirkende Bremssysteme kann daher verzichtet werden - mit den entsprechenden Einsparungen bei Kosten, Material und Wartung. Auch kann auf sehr teure Bremssysteme, die entsprechend der Solldrehzahl der Spindel wirken, verzichtet werden. Auch deren komplexe, teure und fehleranfällige Steuerung und Regelung entfällt. Wird die Spindelsteigung vergrößert, kann entsprechend schneller gefahren werden.

Weiterhin kann neben der Zentrifugalbremse 1 am Ende der Spindel 32 ebenfalls die Motorverbindung vorhanden sein; siehe hierzu Figur 1 und Figur 2. Da dann etliche Teile in Doppelfunktion verwendet werden können, treten neben den schon beschriebenen Vorteilen der Zentrifugalbremse 1 weitere Vorteile auf.

Durch die Doppelverwendung der ersten Riemenscheibe 13 als Planetenträger 9 im Falle des Planetengetriebes sowie der Doppelverwendung der gesamten Motorverbindung als erstem Teilgetriebe im Falle des Keilriemengetriebes lassen sich Baukosten, Wartungskosten, Ersatzteilkosten und Lagerkosten sparen. Die Baukosten reduzieren sich, da etliche Teile statt in zwei unterschiedlichen Ausführungen oder statt in mehrfacher Ausführung nur einmal vorhanden sind. Bei der Wartung sind somit auch weniger Teile zu überprüfen. Dementsprechend reduzieren sich auch der Ersatzteilaufwand und die dazu notwendige Logistik sowie die Lagerkosten. Da es sich sämtlich um bewegliche Teile handelt, reduziert sich im entscheidenden Maße mit ihrer Einsparung der finanzielle Aufwand für ihre Montage und ihren Betrieb. Übernimmt etwa ein rotierendes Bauteil die Funktion eines zweiten rotierenden Bauteils mit, sind in aller Regel die Kosten der dann notwendigen Lagerung geringer, als wenn zwei Lager verbaut würden. Auch sind dann weniger Schmier- und sonstige Betriebsmittel an weniger Stellen aufzubringen und zu überwachen. Die geringe räumliche Ausdehnung begünstigt auch die Überprüfung etwa bei Sichtkontrollen.

Folglich können bei günstiger Platzierung der Zentrifugalbremse 1 am Hebebühnenantrieb 30 in der Kombination Vorteile erzielt werden, die die großen Vorteile der Zentrifugalbremse 1 alleine noch weiter übertreffen.

Die einzelnen Merkmale der Erfindung sind selbstverständlich nicht auf die beschriebenen Kombinationen von Merkmalen im Rahmen der vorgestellten Ausführungsbeispiele beschränkt und können in Abhängigkeit vorgegebener Vorrichtungsparameter auch in anderen Kombinationen eingesetzt werden.

### Liste der Referenzzeichen

- 1: Zentrifugalbremse
- 2: Bremsring
- 3: Bremsbackenträger
- 4: Bremsbacke
- 5: Federelement
- 6: Welle
- 7: Getriebeelement
- 8: Planetenrad
- 9: Planetenträger
- 10: Sonnenrad
- 11: erster Keilriemen
- 12: zweiter Keilriemen
- 13: erste Riemenscheibe
- 14: zweite Riemenscheibe
- 15: dritte Riemenscheibe
- 16: vierte Riemenscheibe
- 30: Hebebühnenantrieb
- 31: Motor
- 32: Spindel
- 33: Mutter
- 34: Tragarm

## Patentansprüche

1. Zentrifugalbremse (1) für einen Hebebühnenantrieb, mit
- einer drehbaren Welle (6),
- einem feststehenden Bremsring (2) und
- einem Bremsbackenträger (3), der mit der Welle (6) verbunden ist und der mindestens eine Bremsbacke (4) und mindestens ein Federelement (5) aufweist,
wobei
das Federelement (5) auf die Bremsbacke (4) eine radial nach innen wirkende Kraft in Richtung des feststehenden Bremsringes (2) ausübt, die im Wesentlichen entgegengesetzt zu der auf die Bremsbacke (4) wirkenden Zentrifugalkraft ist, die aus einer Drehung des Bremsbackenträgers (3) resultiert.

2. Zentrifugalbremse (1) nach Anspruch 1, wobei ein Getriebeelement (7) die Drehung der Welle (6) ins Schnelle auf den Bremsbackenträger (3) überträgt.

3. Zentrifugalbremse (1) nach Anspruch 2, wobei das Getriebeelement (7) ein Planetengetriebe ist, das mindestens zwei Planetenräder (8) aufweist, die mittels eines Planetenträgers (9) verbunden sind, und ein Sonnenrad (10) aufweist, wobei die Drehung der Welle (6) dem Planetenträger (9) direkt eingeprägt ist und das Sonnenrad (10) fest mit dem Bremsbackenträger (3) verbunden ist und der Bremsring (2) als Hohlrad dient.

4. Zentrifugalbremse (1) nach Anspruch 3, wobei das Getriebeelement (7) Zahnräder aufweist.

5. Zentrifugalbremse (1) nach Anspruch 3, wobei das Getriebeelement (7) Reibräder aufweist.

6. Zentrifugalbremse (1) nach Anspruch 2, wobei das Getriebeelement (7) mindestens einen ersten Keilriemen (11) und mindestens eine erste Riemenscheibe (13) und eine zweite Riemenscheibe (14) aufweist.

7. Zentrifugalbremse (1) nach Anspruch 6, wobei das Getriebeelement (7) den ersten Keilriemen (11) und einen zweiten Keilriemen (12) aufweist und die erste Riemenscheibe (13), die zweite Riemenscheibe (14), eine dritte Riemenscheibe (15) und eine vierte Riemenscheibe (16) aufweist, die zusammen zweistufig jeweils eine Übersetzung ins Schnelle bewirken.

8. Zentrifugalbremse (1) nach Anspruch 7, wobei die vierte Riemenscheibe (16) fest mit dem Bremsbackenträger (3) verbunden ist.

9. Zentrifugalbremse (1) nach zumindest einem der Ansprüche 1 bis 8, wobei der Bremsbackenträger (3) als Rotationsachse eine Hauptträgheitsachse besitzt, die gleichzeitig die Rotationsachse der Welle (6) ist.

10. Hebebühnenantrieb (30), mit
- einem Motor (31),
- einer vom Motor (31) antreibbaren Spindel (32),
- einer Mutter (33), die in ein Gewinde der Spindel (32) eingreift,
- einem mit der Mutter (33) verbundenen Tragarm (34) zur Aufnahme einer Last und
- der Zentrifugalbremse (1) nach zumindest einem der Ansprüche 1 bis 9,
wobei
die Rotationsachse der Welle (6) der Rotationsachse der Spindel (32) entspricht und die Zentrifugalbremse (1) bei stehendem Motor (31) ein Bewegen der Last verhindert, indem sie ein Drehen der Spindel (32) verhindert.
